# EUROPÄISCHE PATENTSCHRIFT

(11) **EP 1 525 462 B1**
(45) Veröffentlichungstag und Bekanntmachung des Hinweises auf die Patenterteilung: **07.02.2007**
(21) Anmeldenummer: 03783987.5
(22) Anmeldetag: 25.06.2003
(51) Int. Cl.: G01N 27/30

(54) **VERFAHREN ZUR HERSTELLUNG VON PH-SONDEN**
METHOD FOR PRODUCING PH PROBES
PROCEDE POUR PRODUIRE DES SONDES PH

(30) Priorität: 25.07.2002 DE 10233903
(43) Veröffentlichungstag der Anmeldung: 27.04.2005
(73) Patentinhaber: Testo AG, 75853 Lenzkirch (DE)
(72) Erfinder: DERR, Andreas, 79793 Wutöschingen (DE)
(74) Vertreter: Schmuckermaier, Bernhard
(86) Internationale Anmeldenummer: PCT/EP2003/006715
(87) Internationale Veröffentlichungsnummer: WO 2004/015408

(56) Entgegenhaltungen:
- EP-A- 0 247 535
- DE-A- 10 004 583
- US-A- 4 252 124
- US-A- 4 783 250

## Beschreibung

Die vorliegende Erfindung betrifft ein Verfahren zur Herstellung einer pH-Sonde.

Derartige Sonden können beispielsweise pH-Messsonden zur Messung des pH-Wertes einer Flüssigkeit oder von Lebensmitteln, wie z.B. Fleisch, sein und beispielsweise in tragbaren Messgeräten eingebaut sein. In der einfachsten Ausgestaltung weisen solche Messsonden zwei in einem Gehäuse angeordnete Elektroden auf. Üblicherweise ist zwischen der ersten Elektrode und dem Gehäuse eine Kammer gebildet, in der eine, beispielsweise aus einem Polymerprotolytgel ausgebildete, zweite Elektrode untergebracht ist.

Bei der Herstellung solcher Messsonden kommt es darauf an, dass die innere Elektrode hochohmig gegenüber der äußeren Elektrode ist und dass möglichst kein Flüssigkeitsaustausch der Messflüssigkeit der ersten Elektrode gegenüber der Messflüssigkeit der zweiten Elektrode stattfinden kann. Für solche Polymerelektrolyt-Messsonden sind im wesentlichen zwei unterschiedliche Konstruktionen bekannt: Einerseits gibt es Messsonden, die vollständig aus Glas sind, andererseits existieren auch Messsonden aus Kunststoff, bei der aber die innere Elektrode in einem Glasröhrchen angeordnet ist. Der Aufbau und die Funktionsweise dieser wird nachfolgend kurz erläutert.

Bei der Herstellung von Glaselektroden werden zunächst zwei Elektrodenkammern durch Glasbläserei hergestellt, wobei die innere Elektrode durch eine pH-Glasmembran verschlossen ist und die äußere Elektrode in einer Elektrodenkammer angeordnet ist, die auf das verschlossene Ende der inneren Elektrode aufgeschmolzen wird. Dadurch entsteht gewissermaßen ein doppelwandig ausgebildeter Glasbecher.

In die Kammer der inneren Elektrode wird flüssiges Elektrolyt eingegossen. Die innere Kammer wird mit einem Schaumstoffzylinder verschlossen und durch den Schaumstoffzylinder, der als Pfropfen die innere Kammer verschließt, wird ein Silberdraht gestochen und bis zum Elektrodenboden geschoben. Zur weiteren Abdichtung der inneren Kammer wird Silikon in den hinteren Bereich des Glasröhrchens eingespritzt. Die so vormontierten Messsonden müssen anschließend ein paar Stunden aushärten, um den Silberdraht in der inneren Kammer zu fixieren.

Der Silberdraht der inneren Elektrode wird nun mit einer Koaxialleitung verbunden, wobei aus Schirmungsgründen darauf geachtet werden muss, dass das verlötete Ende des Silberdrahtes zusammen mit der inneren Isolierung der Koaxialleitung in das Glasröhrchen der inneren Elektrode eintaucht. Da aufgrund des geringen Durchmessers des Glasröhrchens in seinem Innenraum nicht gelötet werden kann, muss typischerweise in das aus dem Glasröhrchen herausragende Ende des Silberdrahtes eine Wendel in Form einer mechanischen Feder oder Spirale gewickelt werden. Nach dem Löten wird dieses, das Ende des Silberdrahtes bildende Wendel beim Einschieben einer Isolation durch die Isolation zusammengedrückt.

Die Kammer der äußeren Elektrode wird in gleicher Weise mit einem Schaumstoff verschlossen und über ein Silikonmaterial abgedichtet. Für die Zugentlastung des Elektrodenstiftes wird eine Kunststoffkappe auf das Ende der Sonde geschoben und mit einem Kleber, typischerweise einem 2-Komponenten Epoxydharz, vergossen. Unter Vakuum wird in die äußere Kammer der Messsonde ein Polymerelektrolyt gefüllt.

Die Fertigung solcher Glaselektroden ist aufgrund der Vielzahl unterschiedlicher Herstellungsschritte außerordentlich aufwendig. Erschwerend kommt hinzu, dass aufgrund des Materials der Glaselektrode sowie des geringen zur Verfügung stehenden Raumes während der Montage der Glaselektroden sehr viele komplizierte Fertigungsschritte erforderlich sind, die eine automatisierte Fertigung mit einer zufrieden stellenden Ausbeute kaum zulassen. Problematisch ist hier insbesondere die Verwendung der Glasröhrchen, da die Montage der unterschiedlichen Komponenten häufig innerhalb der bruchempfindlichen Glaselektroden oder zumindest in deren unmittelbarer Nähe stattfindet. Dies verhindert in den häufigsten Fällen den Einsatz von Fertigungsmaschinen zur Automatisierung des Herstellungsprozesses. Das bedeutet jedoch gleichermaßen, dass aufgrund der Vielzahl unterschiedlicher Fertigungsprozesse und der Notwendigkeit, diese weitestgehend manuell vorzunehmen, die entsprechenden Glasmesssonden sehr teuer in der Herstellung sind.

Mithin besteht somit der Bedarf, Messsonden für Messgeräte bereitzustellen, die ohne Einschränkung ihrer Funktionalität konstruktiv einfacher und damit kostengünstiger in der Herstellung sind.

Sehr viel einfacher als die eben beschriebenen Messsonden aus Glas lassen sich Kunststoffmesssonden herstellen. Der Aufbau einer solchen Kunststoffmesssonde ist beispielsweise in dem deutschen Patent DE 100 04 583 C2 beschrieben.

Grundsätzlich sind für die Herstellung solcher Kunststoffsonden im wesentlichen die gleichen Herstellungsschritte wie zur Herstellung einer Messsonde aus Glas erforderlich. Da hier einerseits die teure Glasbläserei zur Herstellung der Glasummantelung der Elektrode entfallen kann, können einige Herstellungsschritte durch Automation vereinfacht werden. Nichts desto Trotz ist es auch hier erforderlich, eine Vielzahl von Herstellungsschritten manuell vorzunehmen, die die Kunststoffmesssonde unerwünschterweise verteuern.

Wie bereits in der DE 100 04 583 C2 beschrieben sind Kunststoffsonden gegenüber Glassonden sehr viel robuster, jedoch sind sie insbesondere in Axialrichtung sehr stoßempfindlich. Darüber hinaus ist es insbesondere für die Wirtschaftlichkeit einer Messsonde erforderlich, dass von Zeit zu Zeit die Elektrolytflüssigkeit im Inneren der Messsonde nachgefüllt wird oder ausgetauscht wird. Dies ist allerdings bei Messsonden aus Kunststoff nicht oder wenig zufriedenstellend möglich. Darüber hinaus zeichnen sich Glasmesssonden gegenüber Kunststoffmesssonden dadurch aus, dass sie auch dann verwendet werden können, wenn hohe hygienische Anforderungen erfüllt werden müssen oder wenn beispielsweise das Messmedium eine sehr hohe Temperatur aufweist. In beiden Fällen eignen sich Glassonden wegen der geringen Ausgasung von Fremdstoffen und wegen der hohen thermischen Stabilität sehr viel besser als Kunststoffmesssonden.

Ausgehend davon liegt der vorliegenden Erfindung daher die Aufgabe zugrunde, hochwertige Messsonden möglichst ohne Verwendung von Klebe- und Vergussvorgänge herzustellen. Eine weitere Aufgabe besteht darin, ein möglichst einfaches, weitestgehend automatisierbares Verfahren zur Herstellung hochwertiger Sonden bereitzustellen. Eine weitere Aufgabe der vorliegenden Erfindung besteht darin, ein Verfahren zur Herstellung einer Messsonde zu schaffen, durch welches es möglich ist, dass die Messsonde nach der Herstellung wieder geöffnet werden kann.

Diese Aufgaben werden erfindungsgemäß durch ein Verfahren zur Herstellung einer Messsonde mit den Merkmalen des Patentanspruchs 1 gelöst.

Demgemäß ist ein Verfahren zur Herstellung einer Messsonde, insbesondere einer pH-Messsonde, bestehend aus einem Gehäuse sowie zwei Elektroden mit den folgenden Verfahrensschritten vorgesehen:
(a) zur Bildung einer Aufnahmevorrichtung wird ein Kunststoff umspritzter Elektrodendraht, der beidseitig aus der Aufnahmevorrichtung herausragt, bereitgestellt, der Elektrodendraht wird mit seinem ersten Ende an der Aufnahmevorrichtung fixiert, zur Bildung der ersten Elektrode wird ein Glasröhrchen über ein zweites Ende des Elektrodendrahtes geschoben, bis das Glasröhrchen in Anlage mit einer Aussparung der Aufnahmevorrichtung gelangt, Glasröhrchen und Aufnahmevorrichtung werden miteinander befestigt;
(b) zur Bildung einer Bodenplatte, die eine Ausnehmung in Gestalt der Aufnahmevorrichtung aufweist, wird ein weiterer Kunststoff umspritzter Elektrodendraht, der beidseitig aus der Bodenplatte herausragt, bereitgestellt, der weitere Elektrodendraht wird mit seinem aus der Bodenplatte herausragenden Ende an der Bodenplatte fixiert;
(c) Eine Ummantelung mit einem erster Öffnung in Gestalt der Bodenplatte und einer zweiten Öffnung in Gestalt des Glasröhrchens wird bereitgestellt, zur Bildung des Gehäuses werden Ummantelung und Bodenplatte miteinander verschlossen;
(d) Das Glasröhrchen wird durch die Ausnehmung in der Bodenplatte geschoben, bis das Glasröhrchen aus der zweiten Öffnung der Ummantelung herausragt und die Aufnahmevorrichtung in Anlage mit der Bodenplatte gelangt.

Die der vorliegenden Erfindung zugrunde liegende Idee besteht darin, den Silberdraht für die innere Elektrode direkt, d. h. ohne ein zusätzliches Verlöten und ohne Bereitstellung einer zusätzlichen Leitung, direkt vom Inneren des Glasröhrchens nach außen zu führen und dort zu fixieren. Der Silberdraht wird dann so bearbeitet, dass er gleichermaßen den Außenkontakt der Messelektrode bildet. Der besondere Vorteil des erfindungsgemäßen Verfahrens besteht darin, dass ein aufwendiges Verlöten einer von außen zugeführten Leitung und ein Verdrillen des Silberdrahtes nicht mehr erforderlich ist. Jede Kammer für eine Elektrode wird vorteilhafterweise separat hergestellt. Durch das erfindungsgemäße Verfahren wird ferner ein sehr hochwertiger Kontakt bereitgestellt, für den im Vergleich zu bekannten Herstellungsverfahren deutlich weniger Arbeitsschritte erforderlich sind.

Für eine Endmontage ist es dann nur noch erforderlich, dass die beiden Elektroden ineinander geschoben und durch ein Elektrolyt aufgefüllt werden.

Weitere vorteilhafte Ausgestaltungen und Weiterbildungen der Erfindung sind den Unteransprüchen sowie der Beschreibung unter Bezugnahme auf die Zeichnung entnehmbar.

Die Erfindung wird nachfolgend anhand der in den Figuren der Zeichnung angegebenen Ausführungsbeispiele näher erläutert. Es zeigt dabei:
- Figur 1: eine schematische Querschnittsdarstellung eines ersten Messmoduls;
- Figur 2: anhand von Teilbildern (1) - (10) ein erstes erfindungsgemäßes Verfahren zur Herstellung eines Messmoduls entsprechend Figur 1;
- Figur 3: eine schematische Querschnittsdarstellung eines zweiten Messmoduls;
- Figur 4: anhand von Teilbildern (1) - (4) ein zweites erfindungsgemäßes Verfahren zur Herstellung eines Messmoduls entsprechend Figur 3.

In allen Figuren der Zeichnung sind gleiche bzw. funktionsgleiche Elemente - sofern nichts anderes angegeben ist - mit gleichen Bezugszeichen versehen worden.

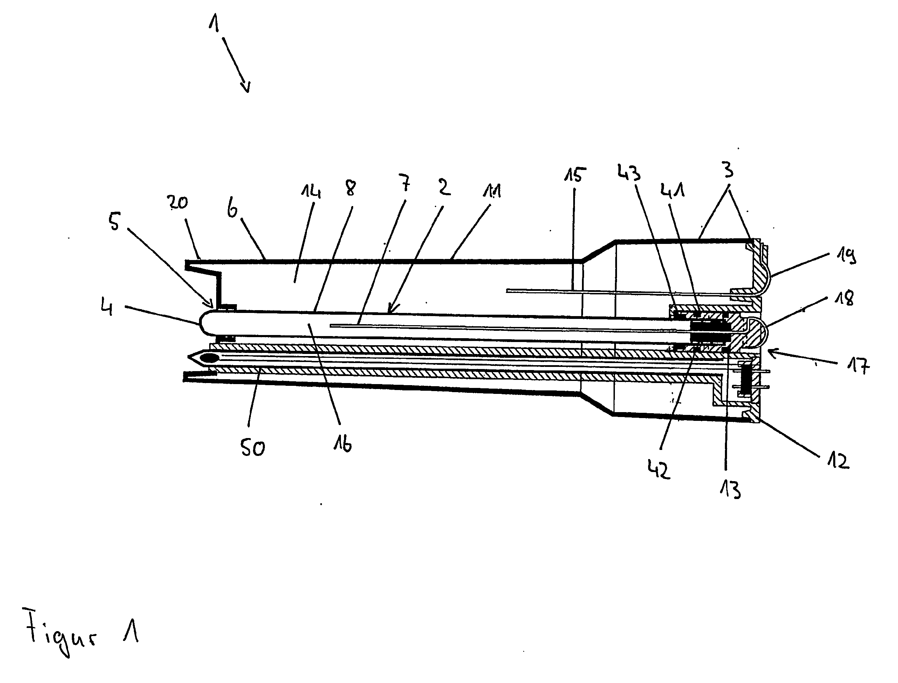

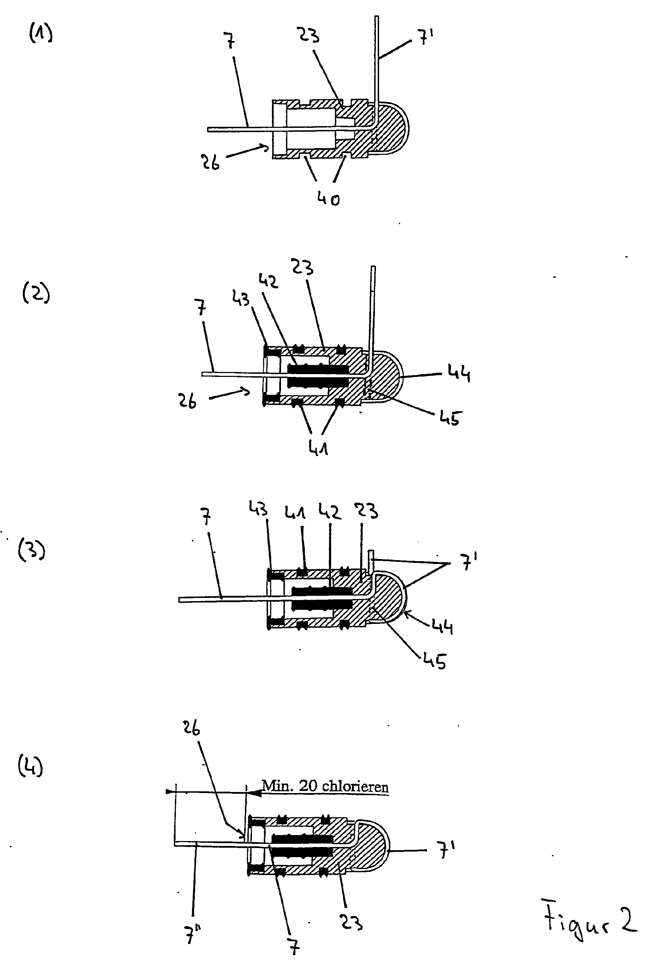

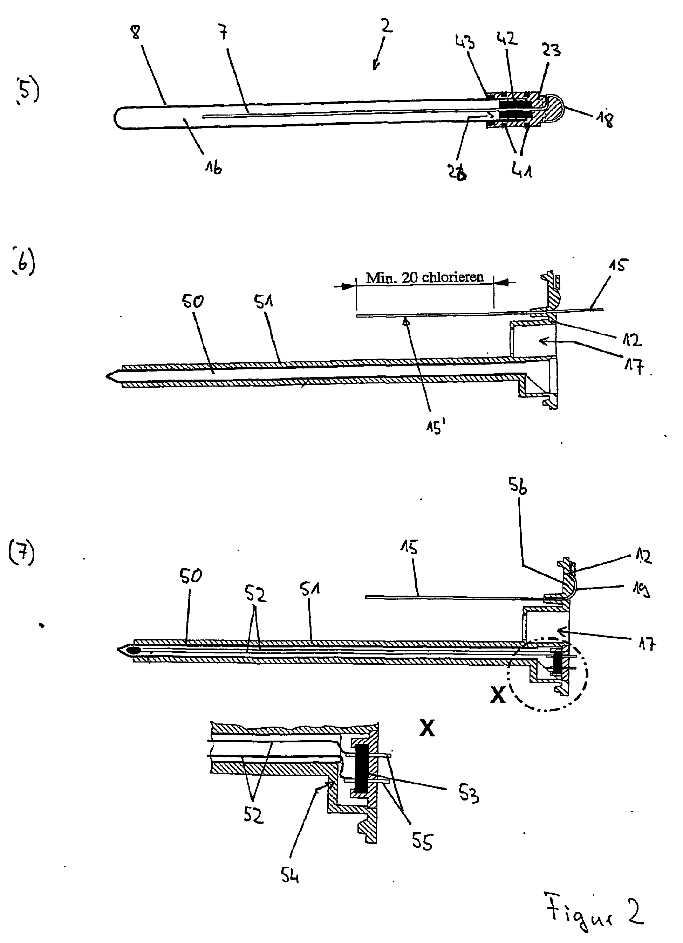

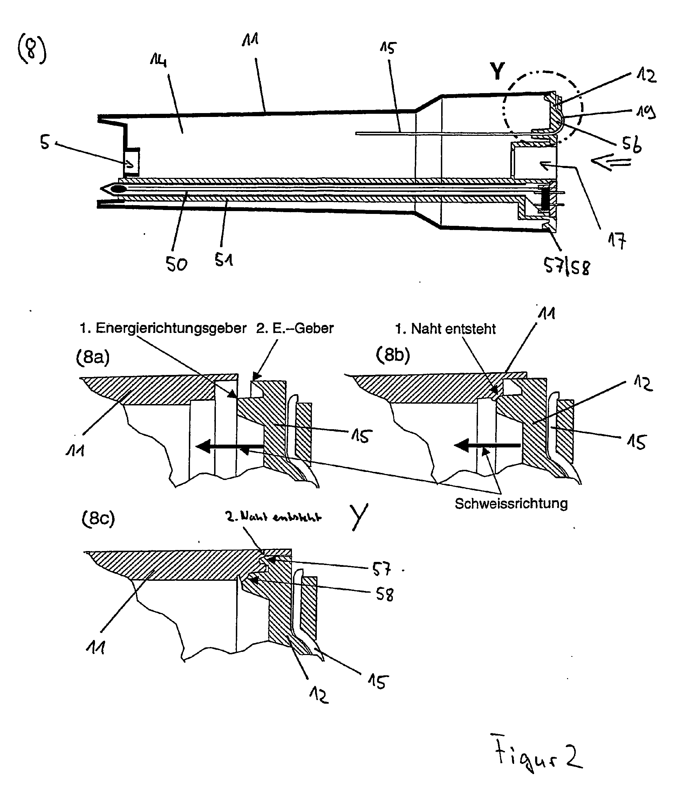

Figur 1 zeigt in einer schematischen Querschnittsdarstellung eine mit Bezugszeichen 1 bezeichnete Messvorrichtung. Die Messvorrichtung 1 ist hier als pH-Messmodul zur Messung des pH-Wertes von Flüssigkeiten, Lebensmitteln, Abwässern und dergleichen ausgebildet. Das Messmodul 1 kann Bestandteil eines in Figur 1 nicht dargestellten Messgerätes sein oder das Messgerät selbst sein. Das Messmodul 1 weist eine langgestreckte erste Elektrode 2 und ein die erste Elektrode 2 wenigstens teilweise umgebendes Gehäuse 3 auf. Eine Messspitze 4 der ersten Elektrode ragt aus einer eigens dafür vorgesehenen Öffnung 5 am oberen Ende 6 des Gehäuses 3 heraus.

Das Gehäuse 3 setzt sich aus einer Ummantelung 11 sowie einer Bodenplatte (Trägerplatte) 12 zusammen. Ummantelung 11 und Bodenplatte 12 bestehen vorzugsweise aus einem mehr oder weniger elastischen Kunststoff. Das Gehäuse 3 ist, mit Ausnahme eines nicht dargestellten Einlasses für die Messflüssigkeit und der Öffnung 5, nach außen hin dicht verschlossen. Zusätzlich oder alternativ kann das Gehäuse 3 an seinem oberen Ende 6 eine ebenfalls nicht dargestellte Schutzhülle aufweisen, welche das Messmoduls 1 nach außen hin, beispielsweise gegen mechanische Belastung, Feuchtigkeit oder dergleichen, schützt.

Die erste Elektrode 2 enthält einen Silberdraht 7, der in einer vorteilhaften Ausgestaltung teilvergoldet ist, sowie eine Ummantelung aus Glas, die zumindest im Bereich der Messspitze 4 ein den Silberdraht 7 umgebendes Glasröhrchen 8 bildet. Das Glasröhrchen 8 enthält eine gängige Elektrolytflüssigkeit und ist nach außen hin abgedichtet. Die erste Elektrode 2 ist an ihrem zur Bodenplatte 12 gerichteten Ende 13 beispielsweise durch Einkleben in die Bodenplatte 12 mit dieser fest verbunden, während ihr anderes Ende im Bereich der Messspitze 4 aus der Ummantelung 11 herausragt.

Die Bereiche zwischen der ersten Elektrode 2 und dem Gehäuse 3 definieren eine Kammer 14. Das Messmodul 1 weist ferner eine zweite, als Silberelektrode ausgebildet Elektrode 15 auf, die mit der Bodenplatte 12 verbunden ist und die in die Kammer 14 hineinragt. Die Kammer 14 ist vorteilhafterweise mit einer Polymerprotolytlösung gefüllt. Die erste Elektrode 2 bildet somit die innere Elektrode und die zweite Elektrode 15 die äußere Elektrode. Der Silberdraht 7 der inneren Elektrode 2 ist somit in einer inneren Kammer 16 und die äußere Elektrode 15 in einer äußeren Kammer 14 angeordnet.

Die Bodenplatte 12 weist eine Aussparung 17 auf, die der Aufnahme der ersten Elektrode 2 dient. Dabei ist das Ende 13 der ersten Elektrode 2 mehr oder weniger formschlüssig in diese Aussparung 17 eingefügt und durch geeignete Mittel, beispielsweise Dichtringe, Einrastvorrichtungen, Klebstoffe, etc., fixiert.

Die Bodenplatte 12 weist ferner an ihrer Außenseite elektrische Kontaktflächen 18, 19 auf. Die erste und die zweite Elektrode 2, 15 sind mit diesen Kontakten 18, 19 elektrisch leitend verbunden.

Zusätzlich weist das Gehäuse 3 an seinem oberen Ende 6 Schutzstege 20 zum Schutz der Messspitze 4 auf. Die Messspitze 4 kann aus diesem Grunde abgerundet sein. Das Messmodul 1 ist hier besonders gut für Messungen in Flüssigkeiten geeignet und findet daher vorteilhaft Verwendung in Labormessgeräten.

Zusätzlich ist in Figur 1 ein zur Messspitze 4 hin spitz zulaufendes Röhrchen 50 vorgesehen, welches einerends mit der Bodenplatte 12 fest verbunden ist und welches andererends im Bereich 6 aus dem Gehäuse 3 herausragt. Dieses spitze Röhrchen 50, welches typischerweise aus rostfreien Stahl besteht, enthält einen Temperatursensor und dient der Temperaturbestimmung des Messguts.

### Ein Messmodul 1 gemäß Figur 1 funktioniert wie folgt:

Für eine Messung wird die Messsonde 1 in ein nicht dargestelltes Messgut eingebracht. Mittels geeigneter, hier nicht näher dargestellter Maßnahmen, beispielsweise einem Diaphragma im Öffnungsbereich des Messmoduls 1, gelangt Flüssigkeit des Messguts in den Bereich zwischen der ersten und der zweiten Elektrode 2, 15. Je nach pH-Wert des zu messenden Messgutes entsteht ein Potentialgefälle zwischen den beiden Elektroden 2, 15, welches an den Kontakten 18, 19 abgreifbar ist. Die so abgegriffene Spannung ist ein Maß für den pH-Wert.

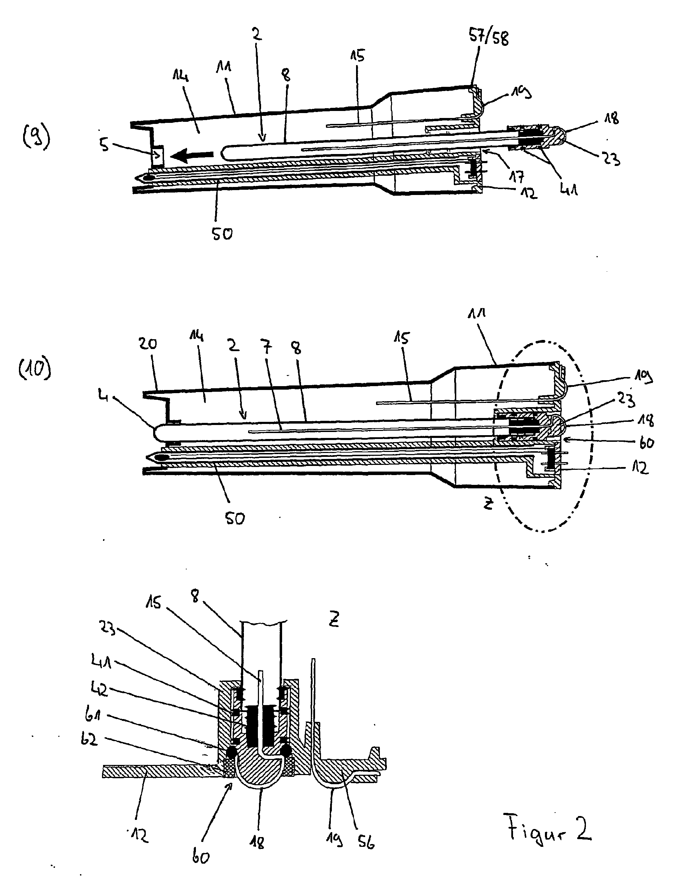

Nachfolgend wird anhand von Teilbildern (1) - (10) der Figur 2 ein vorteilhaftes Verfahren zur Herstellung des pH-Messmoduls 1 entsprechend Figur 1 beschrieben. Die nachfolgende Nummerierung entspricht den entsprechenden Teilbildern in Figur 2:
1. Ein Silberdraht 7, der in einem hinteren Bereich 7' vergoldet ist, wird bereitgestellt. Der vergoldete Bereich 7' des Silberdrahtes 7 wird abgewinkelt. Der teilvergoldete Silberdraht 7 wird mit der vergoldeten Seite nach außen in ein (nicht dargestelltes) Werkzeug gelegt und mit einem Kunststoffmaterial umspritzt, so dass die Aufnahmevorrichtung 23 gebildet wird.
2. Die Aufnahmevorrichtung 23 wird anschließend in ein weiteres Werkzeug zur Erzeugung von Dichtungen 41, 42, 43 eingelegt. Zu diesem Zweck weist die Aufnahmevorrichtung 23 an ihrer Außenfläche Nuten 40 auf. In diese Nuten 40 wird ein Elastomer zur Bildung von Dichtnasen 41 eingespritzt. Die Aufnahmevorrichtung 23 weist ferner eine zentrische Aussparung 26 auf, aus der der Silberdraht 7 herausragt. Im Bereich der Aussparung 26 sowie am oberen Ende der Aussparung 26 wird ebenfalls ein Elastomer zur Bildung eines Gummipuffers 42 sowie einer Innendichtung 43 eingespritzt.
3. Die Aufnahmevorrichtung 23 weist ferner an ihrem der Aussparung 26 gegenüberliegenden Ende eine an der Außenfläche der Aufnahmevorrichtung 23 verlaufende Nut 44 auf. In diesem Bereich der Aufnahmevorrichtung 23 ist außerdem eine durchgehende Querbohrung 45 vorgesehen. Zur Fixierung des Silberdrahtes 7 wird dieser mit seinem Bereich 7' durch die Querbohrung 45 geschoben und festgezogen, so dass der Draht 7' fest in der Nut 44 anliegt.
4. Ein überstehendes Ende des Silberdrahtes 7', welches aus der Querbohrung 45 herausragt, wird abgeschnitten. Der aus der Aussparung 26 herausragende Bereich 7" des Silberdrahtes 7 wird - vorzugsweise 20 Minuten lang - chloriert.
5. Ein Glasröhrchen 8 zur Bildung der ersten Elektrode 2 wird bereitgestellt. In das Glasröhrchen 8 wird zunächst eine Elektrolytflüssigkeit gefüllt. Anschließend wird das Glasröhrchen 8 mit seinem nach einer Seite offenen Ende in die Aussparung 26 der Aufnahmevorrichtung 23 geschoben. Über die Innendichtung 43 sowie den Gummipuffer 42 werden das Glasröhrchen 8 und die Aufnahmevorrichtung 23 gegeneinander fixiert und die gesamte Anordnung nach außen hin abgedichtet. Der Silberdraht 7 wird dabei in die innere Kammer 16 des Glasröhrchens 8 mit der darin enthaltenen Elektrolytflüssigkeit geschoben.
6. Der Silberdraht 15 der zweiten Elektrode 15 sowie ein Edelstahlrohr 50 für den Temperatursensor werden in ein weiteres Werkzeug eingelegt und mit einem Kunststoff geeignet umspritzt. Dabei wird die Bodenplatte 12 gebildet. Nach dem Umspritzen ragen der Silberstift 15 sowie das Edelstahlrohr 50 aus der Bodenplatte 12 heraus. Anschließend wird der Silberdraht 15 mit seinem aus der Bodenplatte 12 herausragenden Ende 15' chloriert.
   Das Edelrohr 50 ist zusätzlich oder alternativ an seiner Außenfläche mit einem Kunststoff 51 überzogen.
7. Zur Bildung des Temperatursensors wird eine gängige Wärmeleitpaste in eine Spitze des Edelstahlrohres 50 gefüllt. Anschließend wird ein doppeladriger NTC-Draht 52 (negativer Temperaturkoeffizient) in das Innere des Edelstahlröhrchens 50 eingeführt. Die beiden Enden des NTC-Drahtes 52 ragen auf der Seite der Bodenplatte 12 aus dem Röhrchen 50 heraus. Im Bereich der Bodenplatte 12 wird eine Kontaktplatte 53 durch Umspritzen erzeugt. Zu diesem Zweck weist die Bodenplatte 12 vorteilhafterweise eine Ausnehmung 54 auf, in die die Kontaktplatte 53 fest eingesteckt oder eingerastet wird. Die Kontaktplatte 53 weist zwei durch die Kontaktplatte 53 durchgehende Kontaktstifte 55 auf, die in einem dem Edelstahlrohr 50 zugewandten Bereich mit den aus diesem herausragenden NTC-Drahtenden 52 verlötet sind.
   Der Silberdraht 15 der zweiten Elektrode 15 wird an seinem aus der Bodenplatte 12 herausragenden Ende in einer eigens in der Bodenplatte 12 vorgesehenen Aufnahmevorrichtung 56, beispielsweise eine Öse, eingefädelt. Der Silberdraht 15 ist dort somit fest fixiert. Außerdem bildet der Silberdraht 15 dort eine Kontaktfläche 19. Das überstehende Ende des Silberdrahtes 15 wird wiederum abgeschnitten.
8. Die Ummantelung 11 der Messsonde 1 wird in einem geeignet ausgebildeten Werkzeug durch Umspritzen hergestellt. Anschließend wird die Bodenplatte 12 mit dem Temperatursensor sowie der zweiten Elektrode 15 in das Innere 14 der Ummantelung 11 geschoben. Das nach außen hin offene Ende der Ummantelung 11 wird anschließend mit den entsprechenden Bereichen der Bodenplatte 12, beispielsweise mittels Ultraschall, verschweißt und so verschlossen. Vorteilhafterweise ist hier eine doppelte Schweißnaht 57, 58 vorgesehen, die ein späteres Herausfließen der Polymerprotolytflüssigkeit verhindern soll. In den vergrößerten Teilansichten (8a) - (8c) ist ein entsprechendes Schweißverfahren zur Herstellung der beiden Schweißnähte 57, 58 anhand von drei Schritten verdeutlicht.
   Alternativ wären selbstverständlich auch andere Verbindungsmöglichkeit - wie zum eine Einrastverbindung, ein Gewinde oder dergleichen - denkbar, wenngleich das Ultraschallverschweißen gepaart mit einer doppelten Schweißnaht 57, 58 (siehe (8a) -(8c)) ein besonders bevorzugtes Verfahren ist.
9. Die Bodenplatte 12 weist eine Öffnung 17 auf, durch die die erste Elektrode 2 durchsteckbar und die Aufnahmevorrichtung 23 formschlüssig einlegbar ist. Die Elektrode 2 samt Aufnahmevorrichtung 23 wird dabei durch diese Öffnung 17 durchgeschoben, bis die erste Elektrode 2 am anderen Ende des Gehäuses 3 aus der Öffnung 5 der Ummantelung 11 herausragt. Die in den Außennuten 40 der Aufnahmevorrichtung 23 angeordneten Gumminasen 41 gewährleisten ein Abdichten und Fixieren der ersten Elektrode 2 bzw. der Aufnahmevorrichtung 23 in der dafür vorgesehenen Ausnehmung 17 der Bodenplatte 12.
10. Nach dem Einschieben der ersten Elektrode 2 samt Bodenplatte 12 ergibt sich in einem äußeren Bereich der Ausnehmung 17 eine zwischen der Aufnahmevorrichtung 23 und der Bodenplatte 12 gebildete Nut 60. In diese Nut 60 wird zunächst ein O-Ring 61 zur Abdichtung eingelegt. Anschließend wird eine Fixierschraube 62 in ein eigens in der Bodenplatte 12 oder der Aufnahmevorrichtung 23 vorgesehenes Gewinde eingedreht. Alternativ wäre es auch denkbar, statt einer Stellschraube 62 ein anderes Verschlussmittel, beispielsweise ein Einrastmittel, vorzusehen.
11. Abschließend wird durch eine eigens zu diesem Zweck im Gehäuse 3 des Messmoduls 1 vorgesehene Öffnung (in Figur 2 nicht dargestellt) die Polymerprotolytlösung in die äußere Kammer 14 eingefüllt.

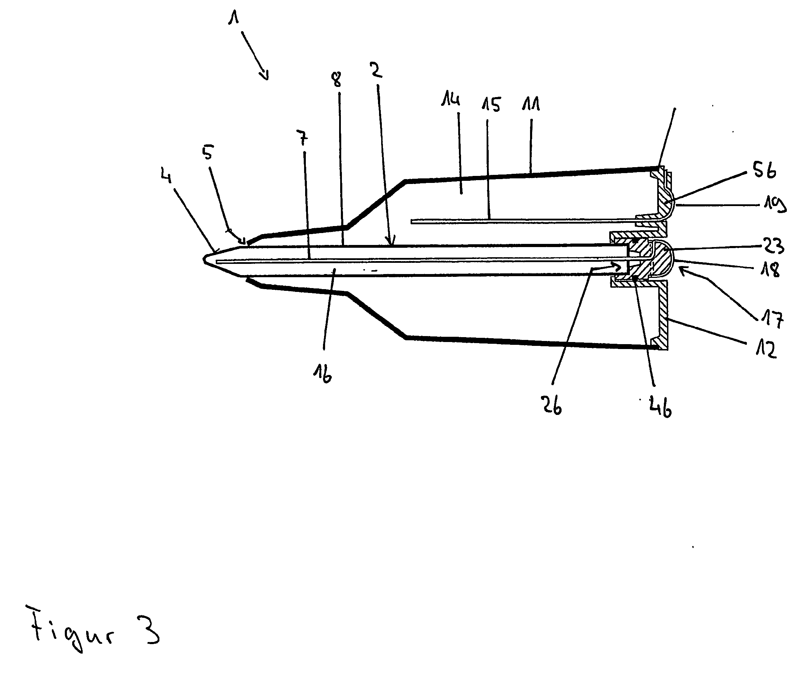

Figur 3 zeigt ein zweites Beispiel eines erfindungsgemäß hergestellten Messmoduls 1. Im Unterschied zum Ausführungsbeispiel in Figur 1 zeichnet sich das Messmodul 1 in Figur 3 durch einen einfacheren, konstruktiv kompakteren Aufbau aus. Im Bereich der Bodenplatte 12 ist die Dichtvorrichtung weniger aufwendig ausgestaltet. Hier ist lediglich eine Einrastvorrichtung vorgesehen.

Ferner wurde auf einen Temperatursensor 50 verzichtet.

Darüber hinaus weist das Gehäuse 3 auch keine Schutzstege 20 zum Schutz der Messspitze 4 auf. Die Messspitze 4 ist hier zum vorderen Ende 6 hin spitz zulaufend ausgebildet und ist damit geeignet zum Einstechen in ein festes Messgut, zum Beispiel Fleisch.

Vorteilhafterweise ist das Messmodul 1 aus Stabilitäts-, Dichte- und Hygienegründen mit einer nicht dargestellten elastischen Schutzhülle ausgestattet.

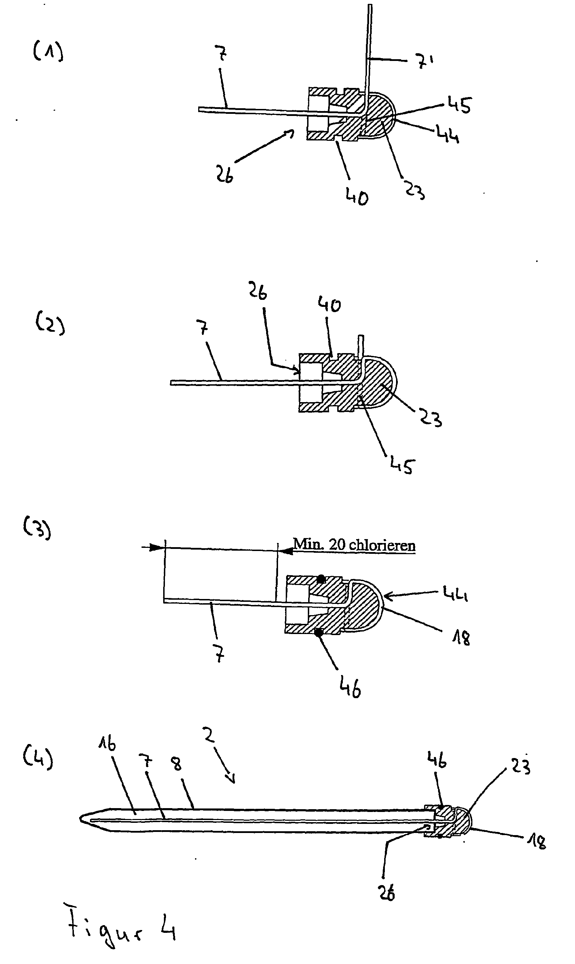

Figur 4 zeigt anhand von Teilbildern (1) - (4) ein zweites erfindungsgemäßes Verfahren zur Herstellung eines Messmoduls 1 entsprechend Figur 3. Das Verfahren zur Herstellung des Messmoduls 1 entspricht hier im wesentlichen dem anhand von Figur 2 beschriebenen Verfahren. Daher wurden in Figur 4 lediglich einige Prozessschritte exemplarisch herausgegriffen:

Die Verfahrensschritte (1) - (4) unterscheiden sich von den Schritten (1) - (5) im wesentlichen dadurch, dass die Aufnahmevorrichtung 23 in Figur 4 sehr viel einfacher ausgebildet ist. Insbesondere fehlen hier die Dichtnasen 41, der Gummipuffer 42 sowie die Innendichtung 43. In die Nut 40 ist hier lediglich ein einfacher O-Ring 46 vorgesehen. Dafür ist die Aufnahmevorrichtung 23 elastisch ausgebildet. Beim Einschieben des Glasröhrchen 8 in die Ausnehmung 26 kommt es somit zu Reibungskräfte, über die das Glasröhrchen 8 und die Ausnehmung 26 gegeneinander fixiert werden.

Im Unterschied zu Figur 2 wird hier auf die Herstellung des Temperatursensors 50 (Schritte (6) und (7)) verzichtet.

Zusammenfassend kann festgestellt werden, dass durch das neue Verfahren auf sehr viel einfachere Weise ein Messmodul 1 herstellbar ist, bei dem trotz weitergehender Automatisierung des Herstellungsprozesses die bisherige Problematik der Bruchgefahr des Glasröhrchens 50 während der Herstellung minimiert werden konnte.

Die vorliegende Erfindung wurde anhand der vorstehenden Ausführungsbeispiele so dargestellt, um das Prinzip der Erfindung und dessen praktische Anwendung bestmöglichst darzulegen, jedoch lässt sich das erfindungsgemäße Verfahren selbstverständlich geeignet abwandeln.

### Bezugszeichenliste

- 1: Messvorrichtung, Messmodul, Messgerät, pH-Messsonde
- 2: erste Elektrode
- 3: Gehäuse
- 4: Messspitze
- 5: Öffnung
- 6: oberes Ende des Gehäuses
- 7,7',7'': Silberdraht
- 8: Glasröhrchen

- 11: Ummantelung
- 12: Bodenplatte, Trägerplatte
- 13: Ende der ersten Elektrode
- 14: (äußere) Kammer
- 15,15': zweite Elektrode, Silberelektrode
- 16: (innere) Kammer
- 17: Öffnung, Aussparung
- 18, 19: Kontaktflächen
- 20: Schutzstege
- 23: Aufnahmevorrichtung
- 26: Aussparung

- 40: Nut
- 41: Dichtnase
- 42: Gummipuffer
- 43: Innendichtung
- 44: Nut
- 45: Querbohrung
- 46: O-Ring

- 50: Röhrchen für den Temperatursensor
- 51: Kunststoff
- 52: NTC-Draht
- 53: Kontaktplatte

- 54: Ausnehmung
- 55: Kontaktstifte
- 56: Aufnahmevorrichtung
- 57, 58: Schweißnähte
- 59: Einrastvorrichtung

- 60: Nut
- 61: O-Ring
- 62: Fixierschraube, Stellschraube

## Patentansprüche

1. Verfahren zur Herstellung einer Messsonde (1), insbesondere einer pH-Messsonde, bestehend aus einem Gehäuse (3) sowie zwei Elektroden (2, 15) mit den Verfahrensschritten:
(a) zur Bildung einer Aufnahmevorrichtung (23) wird ein Kunststoff umspritzter Elektrodendraht (7), der beidseitig aus der Aufnahmevorrichtung (23) herausragt, bereitgestellt,
- der Elektrodendraht (7) wird mit seinem ersten Ende (7') an der Aufnahmevorrichtung (23) fixiert,
- zur Bildung der ersten Elektrode (2) wird ein Glasröhrchen (8) über ein zweites Ende (7'') des Elektrodendrahtes (7) geschoben, bis das Glasröhrchen (8) in Anlage mit einer Aussparung (26) der Aufnahmevorrichtung (23) gelangt,
- Glasröhrchen (8) und Aufnahmevorrichtung (23) werden miteinander befestigt;
(b) zur Bildung einer Bodenplatte (12), die eine Ausnehmung (17) in Gestalt der Aufnahmevorrichtung (23) aufweist, wird ein weiterer Kunststoff umspritzter Elektrodendraht (15), der beidseitig aus der Bodenplatte (12) herausragt, bereitgestellt,
- der weitere Elektrodendraht (15) wird mit seinem aus der Bodenplatte (12) herausragenden Ende (15') an der Bodenplatte (12) fixiert;
(c) Eine Ummantelung (11) mit einer ersten Öffnung in Gestalt der Bodenplatte (12) und einer zweiten Öffnung (5) in Gestalt des Glasröhrchens (8) wird bereitgestellt,
- zur Bildung des Gehäuses (3) werden Ummantelung (11) und Bodenplatte (12) miteinander verschlossen;
(d) Das Glasröhrchen (8) wird durch die Ausnehmung (17) in der Bodenplatte (12) geschoben, bis das Glasröhrchen (8) aus der zweiten Öffnung (5) der Ummantelung (11) herausragt und die Aufnahmevorrichtung (23) in Anlage mit der Bodenplatte (12) gelangt.

2. Verfahren nach Anspruch 1,
**dadurch gekennzeichnet,**
**dass** zur Fixierung des Elektrodendrahtes (7) dieser mit seinem ersten Ende (7') durch eine in der Aufnahmevorrichtung (23) vorgesehenen Querbohrung (45) geschoben, festgezogen und ein aus der Querbohrung (45) herausragendes Ende (7') abgeschnitten wird.

3. Verfahren nach einem der vorstehenden Ansprüche,
**dadurch gekennzeichnet,**
**dass** zur Fixierung des Elektrodendrahtes (7, 15) dieser mit seinem ersten Ende (7', 15') in einer eigens in der Bodenplatte (12) und/oder in der Aufnahmevorrichtung (23) vorgesehenen Aufnahmemitteln (56), beispielsweise einer Öse (56), eingefädelt und festgezogen und ein überstehendes Ende abgeschnitten wird.

4. Verfahren nach einem der vorstehenden Ansprüche,
**dadurch gekennzeichnet,**
**dass** das Verschließen von Ummantelung (11) und Bodenplatte (12) mittels Ultraschall-Schweißen erfolgt.

5. Verfahren nach Anspruch 4,
**dadurch gekennzeichnet,**
**dass** eine doppelte Schweißnaht (57, 58) hergestellt wird.

6. Verfahren nach einem der vorstehenden Ansprüche,
**dadurch gekennzeichnet,**
**dass** nach dem Verschließen von Bodenplatte (12) und Ummantelung (11) eine Elektrolyt-Flüssigkeit, insbesondere eine Polymerprotolytlösung, in das Gehäuse (3) gefüllt wird.

7. Verfahren nach einem der vorstehenden Ansprüche,
**dadurch gekennzeichnet,**
**dass** zur Bildung der ersten Elektrode (2, 47) eine Elektrolyt-Flüssigkeit, insbesondere eine Polymerprotolytlösung, in das Glasröhrchen (32) gefüllt wird.

8. Verfahren nach einem der vorstehenden Ansprüche,
**dadurch gekennzeichnet,**
**dass** die Aufnahmevorrichtung (23) an ihrem der Aussparung (26) gegenüberliegenden Ende eine an seiner Außenfläche verlaufende Nut (44) aufweist, in die der Elektrodendraht (7) eingelegt wird.

9. Verfahren nach einem der vorstehenden Ansprüche,
**dadurch gekennzeichnet,**
**dass** die Aufnahmevorrichtung (23) Außennuten (40) und/oder Innennuten aufweist, in die ein Elastomer zur Erzeugung von Gumminasen (41, 43) zum Abdichten und Fixieren der ersten Elektrode (2) eingespritzt wird.

10. Verfahren nach einem der vorstehenden Ansprüche,
**dadurch gekennzeichnet,**
**dass** die Aufnahmevorrichtung (23) eine zentrische Ausnehmung (26) aufweist, in die ein Elastomer zur Erzeugung eines Gummipuffers (42) zum Abpuffern und Abdichten der ersten Elektrode (2) eingespritzt wird.

11. Verfahren nach einem der vorstehenden Ansprüche,
**dadurch gekennzeichnet,**
**dass** eine zwischen Aufnahmevorrichtung (23) und Bodenplatte (12) gebildete Nut (60) durch einen O-Ring (61) abgedichtet wird und durch eine Fixierschraube (62) oder ein Einrastmittel verschlossen wird.

12. Verfahren nach einem der vorstehenden Ansprüche,
**dadurch gekennzeichnet,**
**dass** zur Fixierung der ersten Elektrode (2) und/oder der zweiten Elektrode (15) diese am Gehäuse (3) angeklebt, angeschweißt oder mit dem Gehäuse (3) umspritzt werden.

13. Verfahren nach einem der vorstehenden Ansprüche,
**dadurch gekennzeichnet,**
**dass** zur Bildung eines Temperatursensors in der Bodenplatte (12) ein Röhrchen (50) mit Kunststoff (51) überzogen wird, eine Wärmeleitpaste in eine Spitze des Röhrchen (50) gefüllt wird und anschließend ein doppeladriger Draht (52), vorzugsweise ein NTC-Draht (52), in das Innere des Röhrchen (50) eingeführt wird, wobei die beiden aus dem Röhrchen (50) herausragenden Enden des Drahtes (52) mit Kontaktstiften (55) verlötet werden.

14. Verfahren nach Anspruch 13,
**dadurch gekennzeichnet,**
**dass** im Bereich der Bodenplatte (12) eine Ausnehmung (54) zur Aufnahme einer Kontaktplatte (53) vorgesehen ist und die Kontaktstifte (55) in die in der Ausnehmung (54) angeordneten Kontaktplatte (53) gesteckt werden.

15. Verfahren nach einem der vorstehenden Ansprüche,
**dadurch gekennzeichnet,**
**dass** die innerhalb des Gehäuses (3) angeordneten Teile (7'') des Elektrodendrahtes (7, 15) zumindest teilweise chloriert werden.

16. Verfahren nach einem der vorstehenden Ansprüche,
**dadurch gekennzeichnet,**
**dass** die von außerhalb des Gehäuses (3) zugänglichen Teile (7', 15') des Elektrodendrahtes (7, 15) zumindest teilweise vergoldet werden.

17. Verfahren nach einem der vorstehenden Ansprüche,
**dadurch gekennzeichnet,**
**dass** die Bodenplatte (12) und/oder die Ummantelung (11) und/oder die Aufnahmevorrichtung (23) durch Einlegen in ein Werkzeug und durch Umspritzen mit Kunststoff hergestellt werden.

## Claims

1. Method for manufacturing a measurement probe (1), in particular a pH measurement probe, consisting of a housing (3) and two electrodes (2, 15), comprising the following method steps:
(a) in order to form a holding device (23), a plastic-coated electrode wire (7) is provided which protrudes out of the holding device (23) at both sides,
- the electrode wire (7) is fixed on the holding device (23) by its first end (7'),
- in order to form the first electrode (2), a glass tube (8) is pushed over a second end (7'') of the electrode wire (7) until the glass tube (8) comes into engagement with a cutout (26) of the holding device (23),
- the glass tube (8) and the holding device (23) are attached to one another;
(b) in order to form a base plate (12) which has a recess (17) in the shape of the holding device (23), a further plastic-coated electrode wire (15) is provided which protrudes out of the base plate (12) at both sides,
- the further electrode wire (15) is fixed on the base plate (12) by its end (15') which protrudes out of the base plate (12);
(c) a sheathing (11) having a first opening in the shape of the base plate (12) and a second opening (5) in the shape of the glass tube (8) is provided,
- in order to form the housing (3), the sheathing (11) and the base plate (12) are locked together;
(d) the glass tube (8) is pushed through the recess (17) in the base plate (12) until the glass tube (8) protrudes out of the second opening (5) of the sheathing (11) and the holding device (23) comes into engagement with the base plate (12).

2. Method according to Claim 1, **characterised in that**, in order to fix the electrode wire (7), the latter is pushed by its first end (7') through a transverse bore (45) provided in the holding device (23), tightened, and an end (7') which protrudes out of the transverse bore (45) is cut off.

3. Method according to one of the preceding claims, **characterised in that**, in order to fix the electrode wire (7, 15), the latter is threaded by its first end (7', 15') into a holding means (56), for example an eye (56), specially provided in the base plate (12) and/or in the holding device (23), and tightened, and a protruding end is cut off.

4. Method according to one of the preceding claims, **characterised in that** the sheathing (11) and the base plate (12) are locked together by means of ultrasonic welding.

5. Method according to Claim 4, **characterised in that** a double weld (57, 58) is produced.

6. Method according to one of the preceding claims, **characterised in that** an electrolyte fluid, in particular a polymer protolyte solution, is filled into the housing (3) after the base plate (12) and the sheathing (11) have been locked together.

7. Method according to one of the preceding claims, **characterised in that**, in order to form the first electrode (2, 47), an electrolyte fluid, in particular a polymer protolyte solution, is filled into the glass tube (32).

8. Method according to one of the preceding claims, **characterised in that** the holding device (23) has a groove (44) running along its outer surface at its end opposite the cutout (26), in which groove the electrode wire (7) is placed.

9. Method according to one of the preceding claims, **characterised in that** the holding device (23) has outer grooves (40) and/or inner grooves, into which an elastomer is injected in order to produce rubber protrusions (41, 43) for sealing and fixing the first electrode (2).

10. Method according to one of the preceding claims, **characterised in that** the holding device (23) has a central recess (26), into which an elastomer is injected in order to produce a rubber buffer (42) for buffering and sealing the first electrode (2).

11. Method according to one of the preceding claims, **characterised in that** a groove (60) formed between the holding device (23) and the base plate (12) is sealed by means of an O-ring (61) and is closed by means of a fixing screw (62) or a latching means.

12. Method according to one of the preceding claims, **characterised in that**, in order to fix the first electrode (2) and/or the second electrode (15), these are adhesively bonded or welded to the housing (3) or overmoulded with the housing (3).

13. Method according to one of the preceding claims, **characterised in that**, in order to form a temperature sensor in the base plate (12), a tube (50) is covered with plastic (51), a heat transfer paste is filled into a tip of the tube (50), and then a twin wire (52), preferably an NTC wire (52), is introduced into the interior of the tube (50), wherein the two ends of the wire (52) which protrude out of the tube (50) are soldered to contact pins (55).

14. Method according to Claim 13, **characterised in that** a recess (54) for accommodating a contact plate (53) is provided in the region of the base plate (12), and the contact pins (55) are inserted into the contact plate (53) arranged in the recess (54).

15. Method according to one of the preceding claims, **characterised in that** the parts (7'') of the electrode wire (7, 15) which are arranged inside the housing (3) are at least partially chlorinated.

16. Method according to one of the preceding claims, **characterised in that** the parts (7', 15') of the electrode wire (7, 15) which are accessible from outside the housing (3) are at least partially gold-plated.

17. Method according to one of the preceding claims, **characterised in that** the base plate (12) and/or the sheathing (11) and/or the holding device (23) are produced by being placed in a mould and overmoulded with plastic.

## Revendications

1. Procédé de fabrication d'une sonde de mesure (1), en particulier d'une sonde de mesure du pH, comprenant un boîtier (3) ainsi que deux électrodes (2, 15), avec les étapes suivantes :
a) pour réaliser un dispositif de réception (23) on utilise un fil pour électrodes (7) entouré de matière plastique qui fait saillie des deux côtés du dispositif de réception (23),
- on fixe le fil pour électrodes (7) par sa première extrémité (7') au dispositif de réception (23),
- pour former la première électrode (2) on fait glisser un tube capillaire en verre (8) sur une deuxième extrémité (7") du fil pour électrodes (7) jusqu'à ce que le tube capillaire en verre (8) arrive en butée contre un évidement (26) du dispositif de réception (23) ;
- on fixe l'un à l'autre le tube capillaire en verre (8) et le dispositif de réception (23),
b) pour réaliser une plaque de base (12) qui présente un creux (17) en forme du dispositif de réception (23), on utilise un autre fil pour électrodes (15) entouré de matière plastique qui dépasse des deux côtés de la plaque de base (12),
- on fixe l'autre fil pour électrodes (15) par son extrémité (15') faisant saillie de la plaque de base (12) à la plaque de base (12) ;
c) on utilise une enveloppe (11) munie d'une première ouverture en forme de la plaque de base (12) et d'une deuxième ouverture (5) en forme du tube capillaire en verre (8),
- pour réaliser le boîtier (3), on scelle l'une avec l'autre l'enveloppe (11) et la plaque de base (12) ;
d) on fait glisser le tube capillaire en verre (8) à travers le creux (17) dans la plaque de base (12) jusqu'à ce que le tube capillaire en verre (8) dépasse de la deuxième ouverture (5) de l'enveloppe (11) et le dispositif de réception (23) arrive en butée contre la plaque de base (12).

2. Dispositif selon la revendication 1,
**caractérisé en ce que**
pour fixer le fil pour électrodes (7), on pousse celui-ci par sa première extrémité (7') à travers un alésage transversal (45) prévu dans le dispositif de réception (23), on le serre et on coupe une extrémité (7') sortant de l'alésage transversal (45).

3. Procédé selon l'une quelconque des revendications précédentes,
**caractérisé en ce que**
pour fixer le fil pour électrodes (7, 15), on enfile celui-ci par sa première extrémité (7', 15') dans des moyens de réception (56), par exemple un oeillet (56), spécialement prévus dans la plaque de base (12) et/ou dans le dispositif de réception, on le serre et on coupe une extrémité sortante.

4. Procédé selon l'une quelconque des revendications précédentes,
**caractérisé en ce que**
on scelle l'enveloppe (11) et la plaque de base (12) par soudage par ultrasons.

5. Procédé selon la revendication 4,
**caractérisé en ce qu'**
on réalise une double soudure (57, 58).

6. Procédé selon l'une quelconque des revendications précédentes,
**caractérisé en ce qu'**
après avoir scellé la plaque de base (12) et de l'enveloppe (11), on verse dans le boîtier (3) un liquide électrolyte, en particulier une solution de polymèreprotolyte.

7. Procédé selon l'une quelconque des revendications précédentes,
**caractérisé en ce que**
pour réaliser la première électrode (2, 47), on verse dans le tube capillaire en verre (32) un liquide électrolyte, en particulier une solution de polymèreprotolyte.

8. Procédé selon l'une quelconque des revendications précédentes,
**caractérisé en ce qu'**
à son extrémité opposée à l'évidement (26), le dispositif de réception (23) présente une rainure (44) s'étendant sur sa face extérieure, dans laquelle on insère le fil pour électrodes (7).

9. Procédé selon l'une quelconque des revendications précédentes,
**caractérisé en ce que**
le dispositif de réception (23) présente des rainures extérieures (40) et/ou des rainures intérieures dans lesquelles on injecte un élastomère pour obtenir des ergots en caoutchouc (41, 43) pour étancher et fixer la première électrode (2).

10. Procédé selon l'une quelconque des revendications précédentes,
**caractérisé en ce que**
le dispositif de réception (23) présente un évidement central (26) dans lequel on injecte un élastomère pour obtenir un tampon en caoutchouc (42) pour tamponner et étancher la première électrode (2).

11. Procédé selon l'une quelconque des revendications précédentes,
**caractérisé en ce qu'**
une rainure (60) formée entre le dispositif de réception (23) et la plaque de base (12) est étanchée par un joint torique (61) et scellée par une vis de fixation (62) ou un moyen d'arrêt.

12. Procédé selon l'une quelconque des revendications précédentes,
**caractérisé en ce que**
pour la fixation de la première électrode (2) et/ou de la deuxième électrode (15) celles-ci sont collées, soudées ou entourées par le boîtier (3).

13. Procédé selon l'une quelconque des revendications précédentes,
**caractérisé en ce que**
pour réaliser un capteur de température dans la plaque de base (12) on recouvre un tube capillaire (50) avec une matière plastique (51), on verse une pâte thermoconductrice dans une pointe du tube capillaire (50) et on introduit ensuite un fil à deux brins (52), de préférence un fil NTC (52), dans le tube capillaire (50), les deux extrémités du fil (52) qui dépassent du tube capillaire (50) étant brasées avec des fiches de contact (55).

14. Procédé selon la revendication 13,
**caractérisé en ce que**
dans la zone de la plaque de base (12) un creux (54) est prévu pour recevoir une plaque de contact (53), et on insère les fiches de contact (55) dans la plaque de contact (53) disposée dans le creux (54).

15. Procédé selon l'une quelconque des revendications précédentes,
**caractérisé en ce que**
les parties (7") du fil pour électrodes (7, 15) disposées à l'intérieur du boîtier (3) sont au moins partiellement chlorées.

16. Procédé selon l'une quelconque des revendications précédentes,
**caractérisé en ce que**
les parties (7', 15') du fil pour électrodes (7, 15) accessibles de l'extérieur du boîtier (3) sont au moins partiellement dorées.

17. Procédé selon l'une quelconque des revendications précédentes,
**caractérisé en ce que**
la plaque de base (12) et/ou l'enveloppe (11) et/ou le dispositif de réception (23) sont fabriqués par insertion dans un outil ou par enrobage par injection de matière plastique.
